# EUROPEAN PATENT SPECIFICATION

(11) **EP 2 857 230 B1**
(45) Date of publication and mention of the grant of the patent: **08.06.2016**
(21) Application number: 13187512.2
(22) Date of filing: 07.10.2013
(51) Int. Cl.: B60C 23/04

(54) **Adjustable tire pressure detector**
Verstellbarer Reifendruckdetektor
Détecteur de pression de pneumatique réglable

(43) Date of publication of application: 08.04.2015
(73) Proprietor: Sung Jung Minute Industry Co., Ltd., 307 Cyonglin Township, Hsinchu County (TW)
(72) Inventor: Huang, Wen-Huo, 307 Cyonglin Township, Hsinchu County (TW)
(74) Representative: 2K Patentanwälte Blasberg Kewitz & Reichel

(56) References cited:
- CN-Y- 201 376 472
- DE-U1-202007 009 443
- FR-A1- 2 983 781
- US-A1- 2008 074 251
- US-A1- 2013 009 762

## Description

### FIELD OF THE INVENTION

The present invention relates to an adjustable tire pressure detector, and particularly to an adjustable tire pressure detector adapted to various types of tire rims.

### BACKGROUND OF THE INVENTION

A tire pressure sensor, disposed on a tire rim of a vehicle, constantly monitors the gas pressure and temperature of the tire, and outputs sensed values to a vehicle display device or a vehicle status warning device through wireless transmission. As such, a driver of the vehicle may be informed of the tire pressure status in real-time during a driving process, so as to prevent accidents resulted by tire abnormalities.

A tire sensor is usually connected to a gas intake nozzle disposed on an assembly hole of the tire rim. The gas intake nozzle serves as an input end for a user to pump gas into the tire. As sizes of tire rims may vary according to different designs and different vehicle types, in order to securely attach a tire pressure sensor on a tire rim after installing the tire pressure sensor, manufacturer needs to perform structural adjustments to the tire pressure sensor for each vehicle model or each uniquely designed tire rim individually. Consequently, production costs are increased. In view of the above issue, a tire pressure sensor capable of appropriately adjusting according to the shape of a tire rim is proposed. For example, as a tire pressure sensor disclosed in the Taiwan Utility Model No. M405977, a gas intake nozzle thereof is disposed with an arched outer adjustment surface. Besides, the tire pressure sensor is further disposed with an arched inner adjustment surface at a position connecting to the gas intake nozzle. The outer adjustment surface and the inner adjustment surface are complementary in shape to perform relative sliding movements. In the above disclosure, the gas intake nozzle is fastened on the tire pressure sensor by penetrating a screw bolt through the outer adjustment surface of the gas intake nozzle and the inner adjustment surface of the tire pressure sensor. Thus, through the structural feature the above disclosure tire pressure sensor becomes suitable for any desired tire rim. However, since the gas intake nozzle is able to slide relatively to the tire pressure sensor and the two are fastened merely by one single screw bolt, jittering during a driving process may cause the gas intake nozzle to waver relatively to the tire pressure sensor. Under a long-term use, the gas intake nozzle is prone to loosening or even disengagement from the tire pressure sensor.

US 2008/074251 A1 discloses a tire monitor system, according to the preambles of claims 1 and 8, including a tire monitor sensor unit that has a tire pressure detector, a coupler and a tire valve. The tire valve operates as an antenna to transmit tire data from the tire pressure detector. The coupler provides a capacitive coupling that removably couples the tire pressure detector and the tire valve. The coupler includes two metal layers separated by a dielectric layer. The two metal layers may be formed by the tire valve and a connection tube.

From FR 2 983 781 A1 a snap-in valve is known for use with a pressure sensor that is placed in a case to form valve-case sensor assembly mounted directly on rim of wheel of vehicle. The valve has a 360 degrees indexing unit indexed with an assembly relative to a rim. The case is relative to a volumetric reduction of a bulb of the valve. The case and the indexing unit are formed by two flat contiguous parts that are carried out on a cylindrical end part of a pipe of the valve, and by two corresponding flat parts to obtain an indexing and locating effect of elements for mounting the case on the valve on the rim of a wheel. The corresponding parts are realized in a corresponding housing of the case.

US 2013/009762 A1 discloses a tire pressure sensor and nozzle assembly including a tire pressure sensor, a nozzle and a fastener for fixing the tire pressure sensor and the nozzle together. The tire pressure sensor has a mount provided with a coupling hole into which a coupling post of the nozzle is inserted. The faster penetrates into the mount and is fixed with the coupling post in such a way that the fastener extends along a direction perpendicular to an axial direction of the coupling post, such that the tire pressure sensor and the nozzle can be firmly coupled with each other.

CN 201 376 472 Y relates to an improved structure of a tire pressure detector, which comprises a body, an air cork, a bolt and a nut. The body comprises a guide slot, a pair of arc surfaces and a pair of clamped surfaces, wherein the are surfaces are respectively arranged on two sides of the guide slot and are respectively connected with the clamped surfaces which are relatively arranged on two sides of the guide slot; one end of the air cork is provided with a universal joint which is paired with the arc surfaces of the body and is provided with a screw hole; the air cork is provided with locking and fastening threads and blocking edges; two sides of the universal joint are provided with a pair of positioning flat surfaces which are opposite to each other and are paired with the clamped surfaces of the body; the bolt penetrates through the guide slot of the body and the screw hole of the air cork and fixes the air cork in the guile slot of the body; and the nut is screwed to the locking and fastening threads of the air cork and is clamped on two sides of a steel ring of a tire together with the blocking edges of the air cork. The torsion force generated from the locking and the fastening of the nut is resisted by the clamped surfaces of the body so as to avoid the rotation of the air cork during the locking and the fastening of the nut.

DE 20 2007 009443 U1 discloses a signal housing unit for a stepwise adjustable tire pressure sensor, including a rim secured to a valve and a valve insert, comprising: a sensor signal housing having a housing holder, and a connecting part, said connecting portion has an arc-like connecting surface, on which a first slot is provided, and in which said housing holder is at the bottom of said connecting part is a groove-shaped third slit is provided; and a D-shaped element connected by a planar portion and a cylindrical portion has a slot (as a mounting hole) formed is perpendicular to said planar portion at the center of said cylindrical portion.

Thus an adjustable tire pressure detector is known that is installed on a tire rim, the tire rim including two fastening sections at two sides to engage with a tire bead of a tire, a connecting section connecting the two fastening sections, and an assembly through hole disposed at one of the fastening sections, the adjustable tire pressure detector comprising:
a detector body, disposed at the fastening sections, comprising:
   a housing; and a gas nozzle assembly hole, penetrating through the housing, a gas intake nozzle, comprising:
      a coupling section, inserted into the gas nozzle assembly hole, comprising an assembly hole facing the gas nozzle assembly hole; and a gas intake section extending from the coupling section towards the assembly through hole, and a gas nozzle assembly member, penetrating through the gas nozzle assembly hole to couple with the assembly hole of the gas intake nozzle to fasten the gas intake nozzle onto the detector body.

### SUMMARY OF THE INVENTION

Therefore the primary object of the present invention is to provide an adjustable tire pressure detector that can be installed on different types of tire rims.

To achieve the above object, an adjustable tire pressure detector is provided according to the features of one of the independent claims.
The adjustable tire pressure detector is installed on a tire rim. The tire rim includes two fastening sections at two sides to engage with a tire bead of a tire, a connecting section connecting the two fastening sections, and an assembly through hole disposed at one of the fastening sections. The adjustable tire pressure detector includes a detector body, a gas intake nozzle, and a gas nozzle assembly member. The detector body is disposed at the fastening sections and includes a housing and a gas nozzle assembly hole penetrating through the housing. The gas nozzle assembly hole includes two parallel limiting contact surfaces and at least one connecting surface connecting the two limiting contact surfaces. The gas intake nozzle includes a coupling section inserted into the gas nozzle assembly hole, and a gas intake section extending from the coupling section towards the assembly through hole. The coupling section includes two compact surfaces corresponding to and tightly pressing against the limiting contact surfaces, at least one abutting contact surface connecting the two compact surfaces and contacting with the connecting surface, and an assembly hole facing the gas nozzle assembly hole. A distance between the two compact surfaces gradually increases from the coupling section towards the gas intake section. The gas nozzle assembly member penetrates through the gas nozzle assembly hole to couple with the assembly hole of the gas intake nozzle, so as to fasten the gas intake nozzle onto the detector body.

In one embodiment, the detector body includes at least one support section extending towards the connection section. Further, the support section includes a buffer member abutting against the connecting section.

In one embodiment, the gas nozzle assembly member further includes an outer screw thread, and the assembly hole includes an inner screw thread for screwing with the outer screw thread.

In one embodiment, the gas intake nozzle includes a limiting fixing section disposed between the coupling section and the gas intake section to engage with the assembly through hole.

In one embodiment, the detector body includes an installation sleeve disposed between gas nozzle assembly hole and the coupling section of the gas intake nozzle. The installation sleeve allows the gas intake nozzle to perform an adjustment movement after being assembled. Further, the installation sleeve includes an assembly end, and the detector body includes an installation portion to couple with the assembly end.

Through the structure of the present invention disclosed above, the adjustable tire pressure detector of the present invention offers the features below:
First of all, through a design that the gas nozzle assembly hole is larger than the coupling section of the gas intake nozzle, the gas intake nozzle is allowed to adjust an appropriate angle when being inserted into the gas nozzle assembly hole. As such, the detector body can be firmly and closely attached to the connecting section of the tire rim to satisfy safety regulations of installing the adjustable tire pressure detector.

Secondly, with the two limiting contact surfaces in the gas nozzle assembly hole, positions of the compact surfaces are limited due to a contact with the limiting contact surfaces, such that the gas intake nozzle is securely fastened onto the detector body.

An adjustable tire pressure detector is further provided according to another embodiment of the present invention. The adjustable tire pressure detector includes a detector body, a gas intake nozzle, and a gas nozzle assembly member. The detector body is disposed at the fastening sections, and includes a housing and a gas nozzle assembly hole formed on the housing. The gas nozzle assembly hole includes two parallel limiting contact surfaces; an assembly surface connecting the two limiting contact surfaces, and including an opening facing the assembly through hole; and an assembly space surrounded by the two limiting contact surfaces and the assembly surface. The gas intake nozzle includes a coupling section inserted into the assembly space, and a gas intake section extending from the coupling section towards the assembly through hole. The coupling section includes two parallel compact surfaces corresponding to and tightly pressing against the limiting contact surfaces; and an arched assembly surface connecting the two parallel compact surfaces, including an assembly hole corresponding to the opening, and being in line contact with the assembly surface. The gas nozzle assembly member penetrates through the opening to couple with the assembly hole of the gas intake nozzle, so as to fasten the gas intake nozzle onto the detector body.

In one embodiment, the detector body includes at least one support section extending towards the connection section.

In one embodiment, the gas nozzle assembly member further includes an outer screw thread, and the assembly hole includes an inner screw thread for screwing with the outer screw thread.

In one embodiment, the gas intake nozzle further includes a limiting fixing section disposed between the coupling section and the gas intake section to engage with the assembly through hole.

In one embodiment, the gas intake nozzle further includes a gas outlet through hole interconnected with the assembly hole to allow an inflation gas to enter the tire.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a schematic view of the adjustable tire pressure detector according to a first embodiment of the present invention;
FIG. 2 is an exploded view of the adjustable tire pressure detector according to the first embodiment of the present invention;
FIG. 3 is a side view of the adjustable tire pressure detector according to the first embodiment of the present invention;
FIG. 4A is a first top view of the adjustable tire pressure detector according to the first embodiment of the present invention;
FIG. 4B is a second top view of the adjustable tire pressure detector according to the first embodiment of the present invention;
FIG. 5A is another side view of the adjustable tire pressure detector according to the first embodiment of the present invention;
FIG. 5B is an enlarged partial side view of the adjustable tire pressure detector in FIG. 5A according to the first embodiment of the present invention;
FIG. 5C is another enlarged partial side view of the adjustable tire pressure detector in FIG. 5A according to the first embodiment of the present invention;
FIG. 5D is the other enlarged partial side view of the adjustable tire pressure detector in FIG. 5A according to the first embodiment of the present invention; and
FIG. 6 is an exploded view of the adjustable tire pressure detector according to a second embodiment of the present invention.

### DETAILED DESCRIPTION OF THE PREFERRED EMBODIMENTS

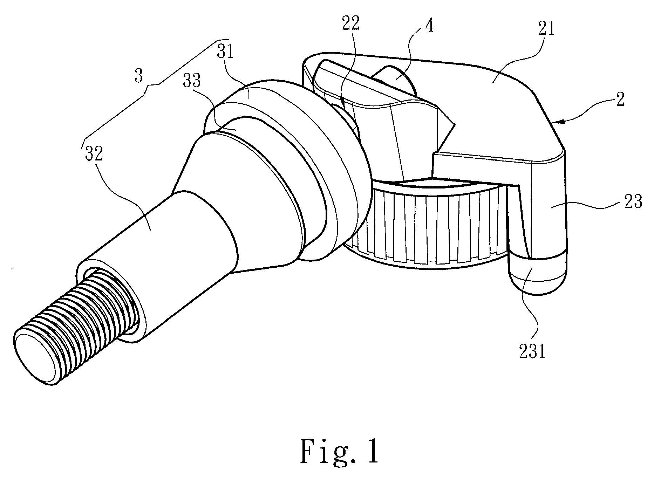

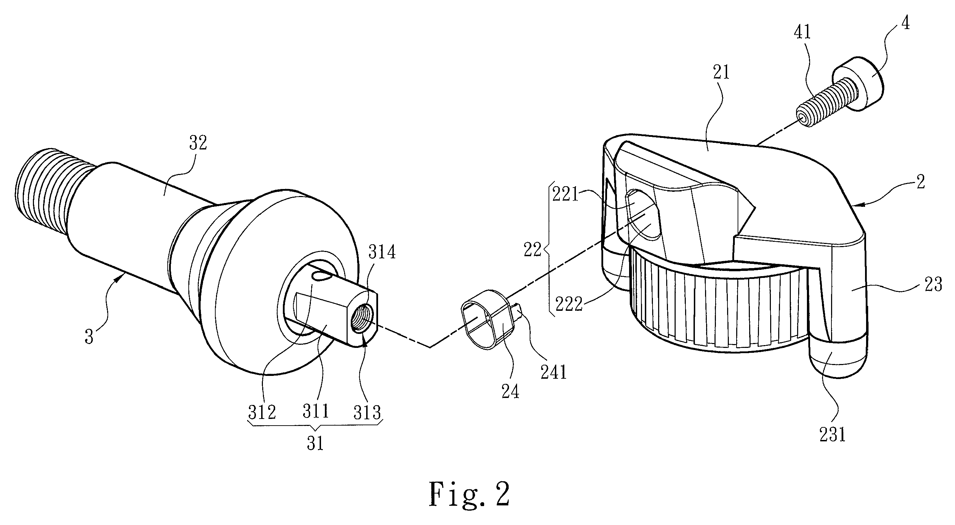

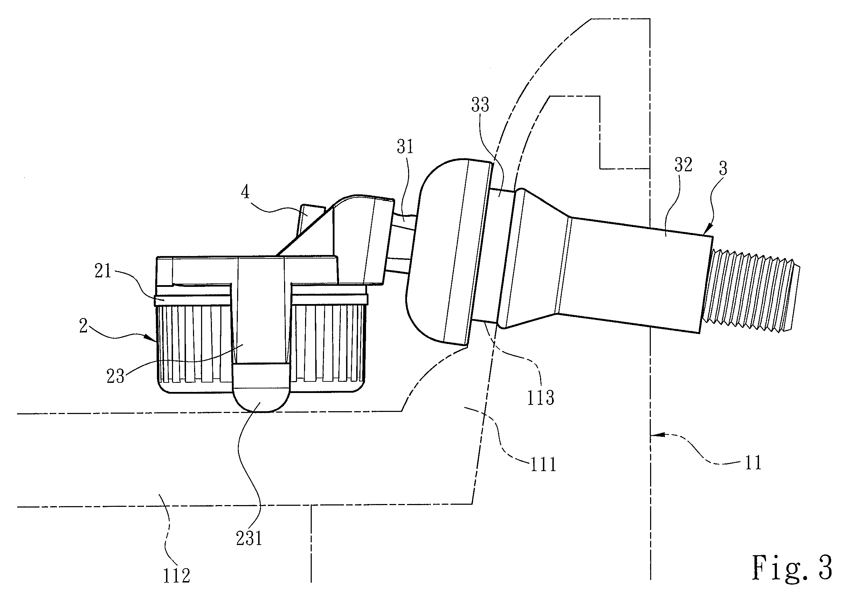

Referring to FIGS. 1 to 3, an adjustable tire pressure detector of the present invention is installed on a tire rim 11. The tire rim 11 includes two fastening sections 111 at two sides to engage with a tire bead of a tire (not shown), a connecting section 112 connecting the two fastening sections 111, and an assembly through hole 113 disposed at one of the fastening sections 111. The adjustable tire pressure detector includes a detector body 2, a gas intake nozzle 3, and a gas nozzle assembly member 4. The detector body 2 includes a housing 21 and a gas nozzle assembly hole 22 penetrating through the housing 21. The gas nozzle assembly hole 22, which appears an ellipse shape, includes two parallel limiting contact surfaces 221 and at least one connecting surface 222 connecting the two limiting contact surfaces 221. The gas intake nozzle 3 includes a coupling section 31 inserted into the gas nozzle assembly hole 22, and a gas intake section 32 extending from the coupling section 31 towards the assembly through hole 113. The coupling section 31 includes two compact surfaces 311 corresponding to and tightly pressing against the limiting contact surfaces 221, at least one abutting contact surface 312 connecting the two compact surfaces 311 and contacting with the connecting surface 222, and an assembly hole 313 facing the gas nozzle assembly hole 22. A distance between the two compact surfaces 311 gradually increases from the coupling section 31 towards the gas intake section 32. Further, each of the compact surfaces 311 is formed at a width smaller than that of the limiting contact surface 221, such that an appropriate adjustment can be performed according to a size of the tire rim 11 after inserting the coupling section 31 into the gas nozzle assembly hole 22. The gas nozzle assembly member 4 penetrates through the gas nozzle assembly hole 22 and then couples with the assembly hole 313 of the gas intake nozzle 3, so as to fasten the gas intake nozzle 3 onto the detector body 2.

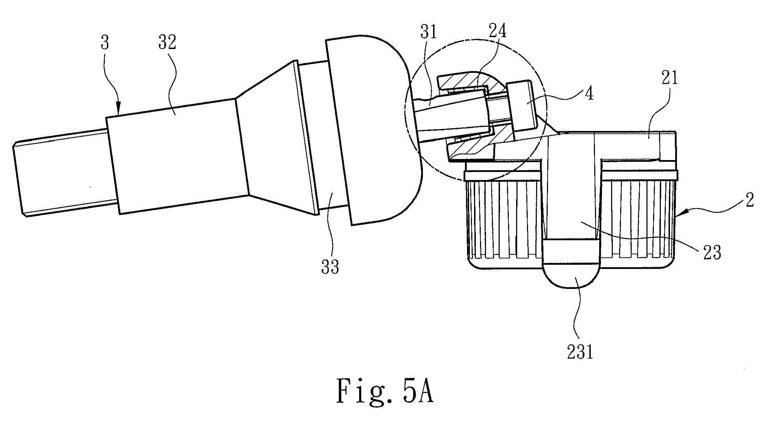

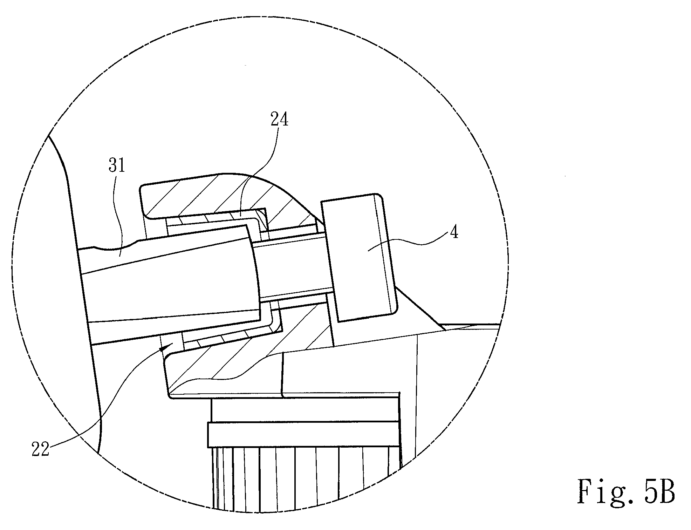

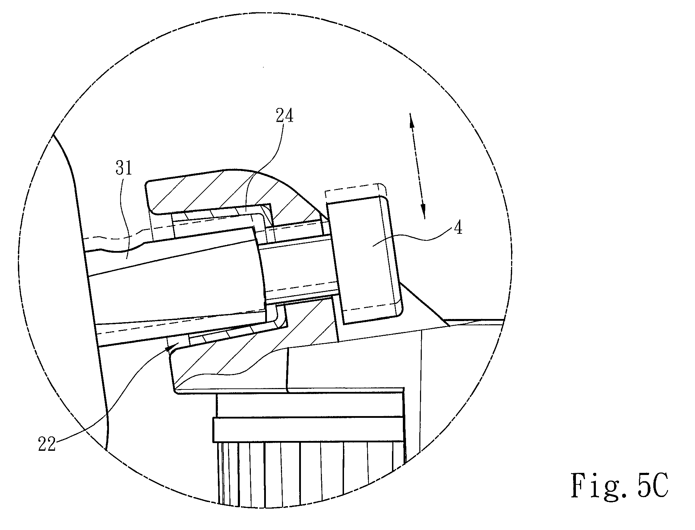

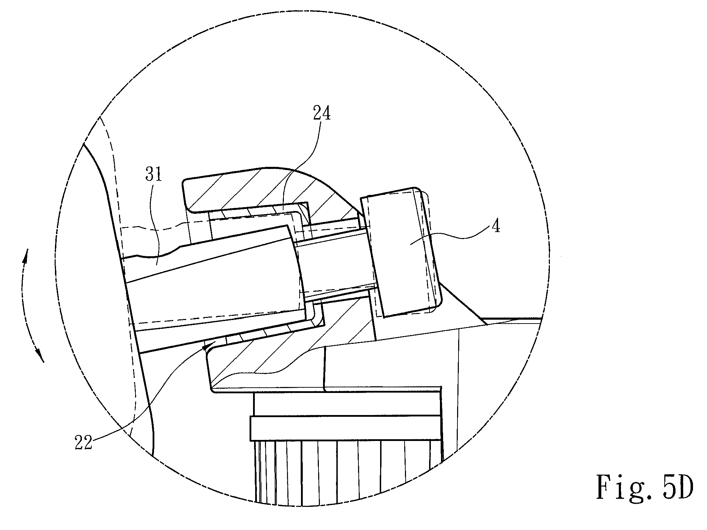

The detector body 2 further includes a support section 23 extending towards the connecting section 112 to separate the detector body 2 from the tire rim 11 by a distance. The support section 23 includes a buffer member 231 abutting against the connecting section 112. The buffer member 231 is disposed to alleviate the jittering of the tire rim 11 which may damage of the detector body 2 during a driving process. Further, the gas intake nozzle 3 includes a limiting fixing section 33 and a gas outlet through hole. The limiting fixing section 33 is disposed between the coupling section 31 and the gas intake section 32 to engage with the assembly through hole 113. The gas outlet through hole is interconnected with the assembly hole 313 and allows pumping gas to enter the tire. In addition, the gas nozzle assembly member 4 further includes an outer screw thread 41, and the assembly hole 313 includes an inner screw thread 314 for screwing with the outer screw thread 41. Referring to FIGS. 5A to 5D, the detector body 2 further includes an installation sleeve 24 disposed between gas nozzle assembly hole 22 and the coupling section 31 of the gas intake nozzle 3. The installation sleeve 24 allows the gas intake nozzle 3 to perform an adjustment movement after being assembled. The installation sleeve 24 appears similar to a taper shape, such that only an end portion of the coupling section 31 comes into contact with the installation sleeve 24 after inserting the coupling section 31 into the installation sleeve 24. It should be noted that, when installing the gas intake nozzle 3 on the tire rim 11, the gas intake nozzle 3 is not inserted into the gas nozzle assembly hole 22 by a fixed angle. More specifically, the above-mentioned adjustment movement refers to a process that, through the installation sleeve 24, the coupling section 31 of the gas intake nozzle 3 is allowed to move appropriately in the gas nozzle assembly hole 22, such as moving up or down, or swinging up or down, to adjust to a preferred assembly position. The installation sleeve 24 further includes an assembly end 241, and the detector body 2 further includes an installation portion 211 to couple with the assembly end 241. For example, the installation portion 211 may be a through hole.

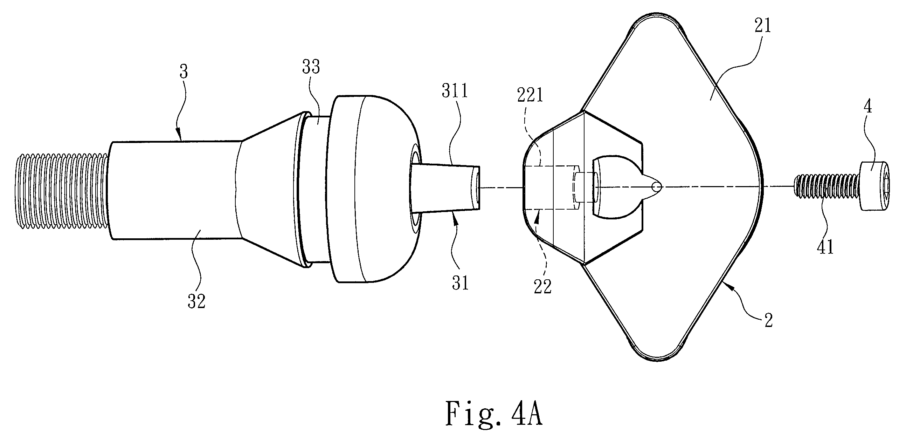

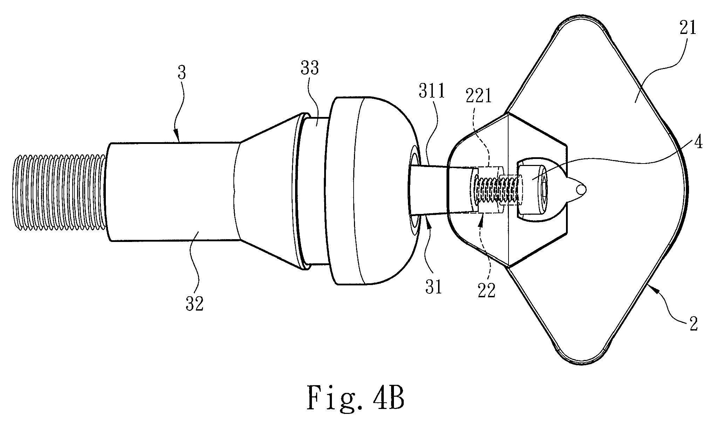

Exemplary operation details for assembling the adjustable tire pressure detector to the tire rim 11 are given below with reference to FIGS. 4A to 5B. The gas intake nozzle 3 is disassembled into the coupling section 31 and the gas intake section 32. The gas intake section 32 is disposed from an outer side of the tire rim 11 towards an inner side of the tire rim 11, and the coupling section 31 is disposed from the inner side of the tire rim 11 towards the outer side of the tire rim 11, so as to couple the coupling section 31 with the gas intake section 32 from two sides of the assembly through hole 113 and thus fasten the gas intake nozzle 3 onto the tire rim 11. The coupling section 31 is inserted into the gas nozzle assembly hole 22 of the detector body 2, and an assembly angle of the coupling section 31 is adjusted according to a shape of the tire rim 11. As such, the abutting contact surface 312 comes into contact with only one of the connecting surfaces 222, and the compact surfaces 311 is limited and oppressed by the limiting contact surface 221, so as to assemble the gas intake nozzle 3 onto the detector body 2. In the present invention, with a design that the gas nozzle assembly hole 22 is slightly larger than the coupling section 31 of the gas intake nozzle 3, the coupling section 31 is allowed to adjust an assembly angle thereof in the gas nozzle assembly hole 22 to adapt to different type of tire rims 11.

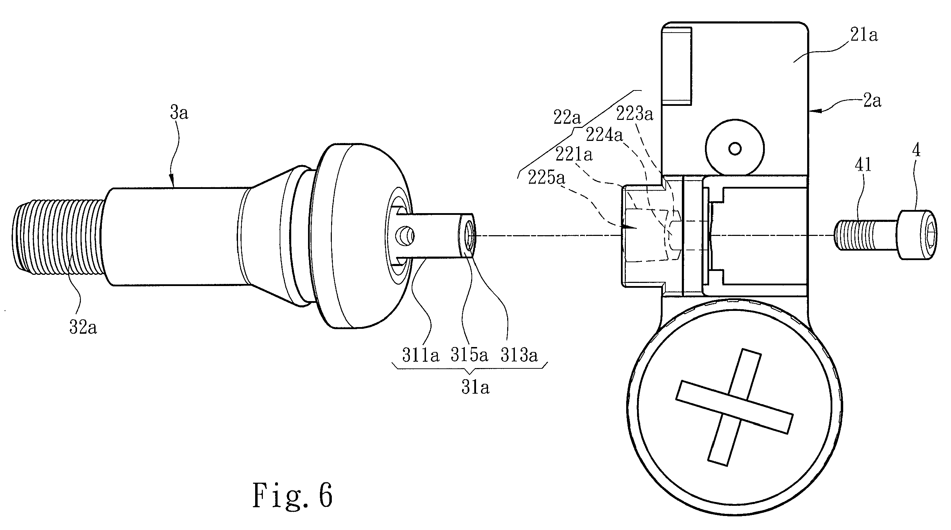

Moreover, the detector body 2 of the present invention can also be implemented in a shape as shown in FIG. 6, not limited in the shape of the embodiment as shown in FIG. 1. FIG. 6 shows another embodiment of the present invention. As shown in FIG. 6, a gas nozzle assembly hole 22a on a detector body 2a includes two parallel limiting contact surfaces 221a; an assembly surface 223a connecting the two limiting contact surfaces 221 a and including an opening 224a facing the assembly through hole 113; and an assembly space 225a surrounded by the two limiting contact surfaces 221a and the assembly surface 223a. A coupling section 31a of a gas intake nozzle 3a includes two parallel compact surfaces 311 a corresponding to and tightly pressing against the limiting contact surfaces 221a; and an arched assembly surface 315a connecting the two parallel compact surfaces 311 a, including an assembly hole 313a corresponding to the opening 224a, and being in line contact with the assembly surface 223a. In the embodiment, when assembling the gas intake nozzle 3a, an angle at which the gas intake nozzle 3a enters the assembly space 225a may be adjusted. That is, a position at which the arched assembly surface 315a comes into contact with the assembly surface 223a is adjustable, so as to allow the gas inlet nozzle 3a to move in the assembly space 225a to adjust to a preferred assembly angle. Further, instead of corresponding to the size of the assembly space 225a, the size of the gas intake nozzle 3 a may be smaller than that of the assembly space 225a, so that the gas intake nozzle 3a may be levelly moved to be adjusted to an appropriate assembly position during assembling.

In conclusion, an adjustable tire pressure detector of the present invention, installed to a tire rim, includes a detector body, a gas intake nozzle and a gas nozzle assembly member. The detector body includes a housing and a gas nozzle assembly hole. The gas nozzle assembly hole has two parallel limiting contact surfaces, and at least one contact surface connecting the two limiting contact surfaces. The gas intake nozzle includes two compact surfaces respectively corresponding to the limiting contact surfaces to closely pack against the limiting contact surfaces, at least one abutting contact surface connecting the two compact surfaces and contacting with the connecting surface, and an assembly hole facing the gas nozzle assembly hole. The gas nozzle assembly member is assembled to the assembly hole of the gas intake nozzle to fasten the gas intake nozzle onto the detector body. Thus, the adjustable tire pressure detector of the present invention may be installed to tire rims of different sizes.

## Claims

1. An adjustable tire pressure detector installed on a tire rim (11), the tire rim (11) including two fastening sections (111) at two sides to engage with a tire bead of a tire, a connecting section (112) connecting the two fastening sections (111), and an assembly through hole (113) disposed at one of the fastening sections, the adjustable tire pressure detector comprising:
a detector body (2), disposed at the fastening sections (111), comprising:
a housing (21); and
a gas nozzle assembly hole (22), penetrating through the housing (21),
a gas intake nozzle (3), comprising:
a coupling section (31), inserted into the gas nozzle assembly hole (22), comprising an assembly hole (313) facing the gas nozzle assembly hole (22); and
a gas intake section (32) extending from the coupling section (31) towards the assembly through hole (113), and
a gas nozzle assembly member (4), penetrating through the gas nozzle assembly hole (22) to couple with the assembly hole (313) of the gas intake nozzle (3) to fasten the gas intake nozzle (3) onto the detector body (2);
**characterized in that**
the gas nozzle assembly hole (22) of the detector body (2) comprises two parallel limiting contact surfaces (221) and at least one connecting surface (222) connecting the two limiting contact surfaces (221);
the coupling section (31) of the gas intake nozzle (3) comprises two compact surfaces (311) corresponding to and tightly pressing against the limiting contact surfaces (221), and at least one abutting contact surface (312) connecting the two compact surfaces (311) and contacting with the connecting surface (222),
wherein a distance between the two compact surfaces (311) gradually increases from the coupling section (31) towards the gas intake section (32).

2. The adjustable tire pressure detector of claim 1, wherein the detector body (2) comprises at least one support section (23) extending towards the connecting section (112).

3. The adjustable tire pressure detector of claim 2, wherein the support section (23) comprises a buffer member (231) abutting against the connecting section (112).

4. The adjustable tire pressure detector of claim 1, wherein the gas nozzle assembly member (4) comprises an outer screw thread (41), and the assembly hole (313) comprises an inner screw thread (314) for screwing with the outer screw thread (41).

5. The adjustable tire pressure detector of claim 1, wherein the gas intake nozzle (3) comprises a limiting fixing section (33) disposed between the coupling section (31) and the gas intake section (32) to engage with the assembly through hole (113).

6. The adjustable tire pressure detector of claim 1, wherein the detector body (2) comprises an installation sleeve (24) disposed between the gas nozzle assembly hole (22) and the coupling section (31) of the gas intake nozzle (3) to allow the gas intake nozzle (3) to perform an adjustment movement after being assembled.

7. The adjustable tire pressure detector of claim 6, wherein the installation sleeve (24) comprises an assembly end (241), and the detector body (2) comprises an installation portion (211) to couple with the assembly end (241).

8. An adjustable tire pressure detector installed on a tire rim (11), the tire rim (11) including two fastening sections (111) at two sides to engage with a tire bead of a tire, a connecting section (112) connecting the two fastening sections (111), and an assembly through hole (113) disposed at one of the fastening sections (111), the adjustable tire pressure detector comprising:
a detector body (2a), disposed at the fastening sections (111), comprising:
a housing (21 a); and
a gas nozzle assembly hole (22a), formed on the housing (21a), comprising an opening (224a) facing the assembly through hole (113),
a gas intake nozzle (3a), comprising:
a coupling section (31a), inserted into the gas nozzle assembly hole (22a), comprising an assembly hole (313a) corresponding to the opening (224a); and
a gas intake section (32a), extending from the coupling section (31a) towards the assembly through hole (113); and
a gas nozzle assembly member (4), penetrating through the opening (224a) to couple with the assembly hole (313a) of the gas intake nozzle (3a) to fasten the gas intake nozzle (3a) onto the detector body (2a),
**characterized in that**
the gas nozzle assembly hole (22a) comprises two parallel limiting contact surfaces (221a), an assembly surface (223a) connecting the two limiting contact surfaces (221a), and an assembly space (225a) surrounded by the two limiting contact surfaces (221a) and the assembly surface (223a);
the coupling section (31a) comprises two parallel compact surfaces (311a) corresponding to and tightly pressing against the limiting contact surfaces (221a), and an arched assembly surface (315a) connecting the two compact surfaces (311a),
the arched assembly surface (351a) being in line contact with the assembly surface (223a).

9. The adjustable tire pressure detector of claim 8, wherein the detector body (2a) further comprises at least one support section (23) extending towards the connecting section (112).

10. The adjustable tire pressure detector of claim 8, wherein the gas nozzle assembly member (4) comprises an outer screw thread (41), and the assembly hole (313a) comprises an inner screw thread (314) for screwing with the outer screw thread (41).

11. The adjustable tire pressure detector of claim 8, wherein the gas intake nozzle (3a) further comprises a limiting fixing section (33) disposed between the coupling section (31a) and the gas intake section (32a) to engage with the assembly through hole (113).

12. The adjustable tire pressure detector of claim 8, wherein the gas intake nozzle (3a) further comprises a gas outlet through hole interconnecting with the assembly hole (313) to allow an inflation gas to enter the tire.

## Patentansprüche

1. Verstellbarer Reifendruckdetektor, angeordnet auf einer Radfelge (11), wobei die Radfelge (11) zwei Befestigungsabschnitte (111) an zwei Seiten zum Eingriff in einen Reifenwulst des Reifens aufweist, einen Verbindungsabschnitt (112), der die zwei Befestigungsabschnitte (111) verbindet, und ein Montage-Durchgangsloch (113) aufweist, welches an einem der Befestigungsabschnitte angeordnet ist, wobei der verstellbare Reifendruckdetektor umfasst:
einen Detektorkörper (2), der an den Befestigungsabschnitten (111) angeordnet ist, umfassend:
ein Gehäuse (21); und
ein Gasdüsen-Montageloch (22), das durch das Gehäuse (21) hindurch geht, eine Gaseinlass-Düse (3), umfassend:
einen Ankopplungsabschnitt (31), der in das Gasdüsen-Montageloch (22) eingeführt ist und ein Montageloch (313) umfasst, welches zu dem Gasdüsen-Montageloch (22) hin ausgerichtet ist; und
einen Gaseinlass-Abschnitt (32), der sich von dem Ankopplungsabschnitt (31) hin zu dem Montage-Durchgangsloch (113) erstreckt, und
ein Gasdüsen-Montageelement (4), das durch das Gasdüsen-Montageloch (22) hindurch geht, um sich mit dem Montageloch (313) der Gaseinlass-Düse (3) zu verbinden, um die Gaseinlass-Düse (3) auf dem Detektorkörper (2) zu befestigen;
**gekennzeichnet dadurch, dass**
das Gasdüsen-Montageloch (22) des Detektorkörpers (2) zwei parallel begrenzende Kontaktflächen (221) und mindestens eine Verbindungsfläche (222) aufweist, welche die zwei begrenzenden Kontaktflächen (221) verbindet;
wobei der Ankopplungsabschnitt (31) der Gaseinlass-Düse (3) zwei kompakte Flächen (311) aufweist, welche zu den begrenzenden Kontaktflächen (221) korrespondieren und sich eng an diese andrücken, und mindestens eine anstoßende Kontaktfläche (312) aufweist, welche die zwei kompakten Flächen (311) verbindet und in Kontakt mit der Verbindungsfläche (222) steht,
wobei ein Abstand zwischen den zwei kompakte Flächen (311) graduell von dem Ankopplungsabschnitt (31) hin zu dem Gaseinlass-Abschnitt (32) zunimmt.

2. Verstellbarer Reifendruckdetektor nach Anspruch 1, wobei der Detektorkörper (2) mindestens einen Unterstützungsabschnitt (23) aufweist, der sich zu dem Verbindungsabschnitt (112) hin erstreckt.

3. Verstellbarer Reifendruckdetektor nach Anspruch 2, wobei der Unterstützungsabschnitt (23) einen Dämpfer (231) aufweist, der gegen den Verbindungsabschnitt (112) drückt.

4. Verstellbarer Reifendruckdetektor nach Anspruch 1, wobei das Gasdüsen-Montageelement (4) ein Schrauben-Außengewinde (41) aufweist und das Montageloch (313) ein Schrauben-Innengewinde (314) zum Verschrauben mit dem Schrauben-Außengewinde (41) aufweist.

5. Verstellbarer Reifendruckdetektor nach Anspruch 1, wobei die Gaseinlass-Düse (3) einen begrenzenden Befestigungsabschnitt (33) umfasst, welcher zwischen dem Ankopplungsabschnitt (31) und dem Gaseinlass-Abschnitt (32) angeordnet ist, um in das Montage-Durchgangsloch (113) einzugreifen.

6. Verstellbarer Reifendruckdetektor nach Anspruch 1, wobei der Detektorkörper (2) eine Montagemuffe (24) umfasst, welche zwischen dem Gasdüsen-Montageloch (22) und dem Ankopplungsabschnitt (31) der Gaseinlass-Düse (3) angeordnet ist, um es der Gaseinlass-Düse (3) zu ermöglichen, eine Einstellbewegung zu machen nachdem diese montiert wurde.

7. Verstellbarer Reifendruckdetektor nach Anspruch 6, wobei die Montagemuffe (24) ein Befestigungsende (241) umfasst, und der Detektorkörper (2) einen MontageAbschnitt (211) umfasst, um sich mit dem Befestigungsende (241) zu verbinden.

8. Verstellbarer Reifendruckdetektor, angeordnet auf einer Radfelge (11), wobei die Radfelge (11) zwei Befestigungsabschnitte (111) an zwei Seiten zum Eingriff in einen Reifenwulst des Reifens aufweist, einen Verbindungsabschnitt (112), der die zwei Befestigungsabschnitte (111) verbindet, und ein Montage-Durchgangsloch (113) aufweist, welches auf einem der Befestigungsabschnitte angeordnet ist, wobei der verstellbare Reifendruckdetektor umfasst:
einen Detektorkörper (2a), der an den Befestigungsabschnitten (111) angeordnet ist, umfassend:
ein Gehäuse (21 a); und
ein Gasdüsen-Montageloch (22a), welches auf dem Gehäuse (21a) angeordnet ist und eine Öffnung (224a) aufweist, die zu dem Montage-Durchgangsloch (113) hin ausgerichtet ist,
eine Gaseinlass-Düse (3a), umfassend:
einen Ankopplungsabschnitt (31a), der in das Gasdüsen-Montageloch (22a) eingeführt ist und ein Montageloch (313a) umfasst, welches zu der Öffnung (224a) korrespondiert; und
einen Gaseinlass-Abschnitt (32a), der sich von dem Ankopplungsabschnitt (31a) hin zu dem Montage-Durchgangsloch (113) erstreckt; und
ein Gasdüsen-Montageelement (4), das durch die Öffnung (224a) hindurch geht, um sich mit dem Montageloch (313a) der Gaseinlass-Düse (3a) zu verbinden, um die Gaseinlass-Düse (3a) auf dem Detektorkörper (2a) zu befestigen,
**gekennzeichnet dadurch, dass**
das GasdüsenMontageloch (22a) zwei parallele begrenzende Kontaktflächen (221a), eine Montageoberfläche (223a), welche die zwei begrenzenden Kontaktflächen (221a) verbindet, und einen Montageraum (225a) aufweist, der von den Kontaktflächen (221 a) und der Montageoberfläche (223a) umfasst wird;
wobei der Ankopplungsabschnitt (31a) zwei parallele kompakte Flächen (311a) aufweist, welche zu den Kontaktflächen (221a) korrespondieren und sich eng an diese andrücken, und eine bogenförmige Montageoberfläche (315a) aufweist, welche die zwei kompakten Flächen (311 a) verbindet,
wobei die bogenförmige Montageoberfläche (351a) in Linienkontakt mit der Montageoberfläche (223a) steht.

9. Verstellbarer Reifendruckdetektor nach Anspruch 8, wobei der Detektorkörper (2a) ferner mindestens einen Unterstützungsabschnitt (23) aufweist, der sich zu dem Verbindungsabschnitt (112) hin erstreckt.

10. Verstellbarer Reifendruckdetektor nach Anspruch 8, wobei das Gasdüsen-Montageelement (4) ein Schrauben-Außengewinde (41) umfasst, und das Montageloch (313a) ein Schrauben-Innengewinde (314) zum Verschrauben mit dem Schrauben-Außengewinde (41) umfasst.

11. Verstellbarer Reifendruckdetektor nach Anspruch 8, wobei die Gaseinlass-Düse (3a) ferner Weiteren einen begrenzenden Befestigungsabschnitt (33) umfasst, der zwischen dem Ankopplungsabschnitt (31a) und dem Gaseinlass-Abschnitt (32a) angeordnet ist, um in das Montage-Durchgangsloch (113) einzugreifen.

12. Verstellbarer Reifendruckdetektor nach Anspruch 8, wobei die Gaseinlass-Düse (3a) ferner ein Gasauslass-Durchgangsloch umfasst, das mit dem Montageloch (313) verbunden ist, um es einem einströmende Gas zu ermöglichen, in den Reifen einzuströmen.

## Revendications

1. Un détecteur de pression de pneumatique réglable installé sur une jante de bandage pneumatique (11), la jante de bandage pneumatique (11) comprenant deux sections de fixation (111) sur deux côtés pour une coopération avec un talon d'un pneu, une section de liaison (112) reliant la deux sections de fixation (111) et un assemblage traversant un trou (113) disposé à l'une des sections de fixation, le détecteur de pression de gonflage réglable comprenant:
un corps de détecteur (2), disposé au niveau des sections de fixation (111), comprenant:
un boîtier (21); et
un trou de montage d'une buse de gaz (22) pénétrant à travers le boîtier (21),
une buse d'admission de gaz (3), comprenant :
une section de couplage (31), insérée dans le trou de montage de la buse de gaz (22), comprenant un trou d'assemblage (313) faisant face au trou de montage de la buse de gaz (22) ; et
une partie d'admission de gaz (32) s'étendant depuis la section de couplage (31) vers l'assemblage traversant un trou (113), et
un élément d'assemblage de buses à gaz (4), pénétrant au travers le trou de montage de la buse de gaz (22) pour le couplage avec l'assemblage traversant un trou (113) de la buse d'admission de gaz pour la fixation de la buse d'admission de gaz sur le corps de détecteur (2) ;
**caractérisé en ce que**
le trou de montage de la buse de gaz (22) du corps de détecteur (2) comporte deux surfaces de contact de limitation parallèles (221) et au moins une surface de liaison (222) reliant les deux surfaces de contact de limitation (221) ;
la section de couplage (31) de la buse d'admission de gaz (3) comporte deux surfaces compactes (311) correspondant et en pression ferme sur les surfaces de contact de limitation (221), et au moins une surface de contact de butée (312) en liaison avec les deux surfaces compactes (311) et en contact avec la surface de liaison (222),
dans lequel une distance entre les deux surfaces compactes (311) s'accroît progressivement depuis la section de couplage (31) jusqu'à la section d'admission de gaz.

2. Le détecteur de pression de pneumatique réglable selon la revendication 1, dans lequel le corps de détecteur (2) comprend au moins une section de support (23) se prolongeant en direction de la section de liaison (112).

3. Le détecteur de pression de pneumatique réglable selon la revendication 2, dans lequel la section de support (23) comprend un élément tampon (231) venant en butée contre la section de liaison (112).

4. Le détecteur de pression de pneumatique réglable selon la revendication 1, dans lequel l'élément d'assemblage de la buse de gaz (4) comporte un filetage extérieur (41) et le trou de montage (313) comprend un filetage interne (314) pour le vissage du filetage extérieur (41).

5. Le détecteur de pression de pneumatique réglable selon la revendication 1, dans lequel la buse d'admission de gaz (3) comprend une section de fixation de limitation (33) disposée entre la section de couplage (31) et la partie d'admission de gaz (32) pour une prise avec l'assemblage traversant un trou (113).

6. Le détecteur de pression de pneumatique réglable selon la revendication 1, dans lequel le corps de détecteur (2) comprend un manchon de montage (24) disposé entre le trou de montage de la buse à gaz (22) et la section de couplage (31) de la buse d'admission de gaz (3) pour permettre à la buse d'admission de gaz (3) d'effectuer un mouvement de réglage après assemblage.

7. Le détecteur de pression de pneumatique réglable selon la revendication 6, dans lequel le manchon d'installation (24) comprend une extrémité de montage (241) et le corps de détecteur (2) comprend une partie d'installation (211) pour un couplage avec l'extrémité d'assemblage (241).

8. Un détecteur de pression de pneumatique réglable installé sur une jante de bandage pneumatique (11), la jante de bandage pneumatique (11) comprenant deux sections de fixation (111) sur deux côtés pour une coopération avec un talon d'un pneu, une section de liaison (112) reliant la deux sections de fixation (111) et un assemblage traversant un trou (113) disposé à l'une des sections de fixation (111), le détecteur de pression de gonflage réglable comprenant:
un corps de détecteur (2a), disposé au niveau des sections de fixation (111), comprenant:
un boîtier (21 a); et
un trou de montage d'une buse de gaz (22a) formée sur le boîtier (21a), comprenant une ouverture (224a) faisant face à l'assemblage traversant un trou (113),
une buse d'admission de gaz (3a), comprenant :
une section de couplage (31 a), insérée dans le trou de montage de la buse de gaz (22a), comprenant un trou de montage (313a) correspondant à l'ouverture (224a) ; et
une partie d'admission de gaz (32a) s'étendant depuis la section de couplage (31 a) vers l'assemblage traversant un trou (113), et
un élément d'assemblage de buse à gaz (4), pénétrant au travers l'ouverture (224a) pour un couplage avec le trou de montage (313a) de la buse d'admission de gaz (3a) pour la fixation de la buse d'admission de gaz (3a) sur le corps de détecteur (2) ;
**caractérisé en ce que**
le trou de montage de la buse de gaz (22a) comporte deux surfaces de contact de limitation parallèles (221a), une surface de montage (223a) connectant les deux surfaces de contact de limitation (221 a), et un espace de montage (225a) entouré par les deux surfaces de contact de limitation (221a) et la surface de montage (223a) ;
la section de couplage (31a) comporte deux surfaces compactes parallèles (311a) correspondant et en pression ferme sur les surfaces de contact de limitation (221a), et une surface de montage courbe (351a) en liaison avec les deux surfaces compactes (311a) ;
la surface de montage courbe (351a) étant en contact linéaire avec la surface de montage (223a).

9. Le détecteur de pression de pneumatique réglable selon la revendication 8, dans lequel le corps de détecteur (2a) comprend en outre au moins une section de support (23) se prolongeant en direction de la section de liaison (112).

10. Le détecteur de pression de pneumatique réglable selon la revendication 8, dans lequel l'élément d'assemblage de buses à gaz (4) comporte un filetage extérieur (41) et le trou de montage (313a) comprend un filetage interne (314) pour le vissage avec le filetage extérieur (41).

11. Le détecteur de pression de pneumatique réglable selon la revendication 8, dans lequel la buse d'admission de gaz (3a) comprend en outre une section de fixation de limitation (33) disposé entre la section de couplage (31a) et la section d'admission de gaz (32a) pour venir en prise avec l'assemblage par trou (113).

12. Le détecteur de pression de pneumatique réglable selon la revendication 8, dans lequel la buse d'admission de gaz (3a) comprend en outre une sortie de gaz par trou traversant, en inter liaison avec le trou de montage (313) pour permettre le gonflage du pneu.
